## Europäisches Patentamt

## European Patent Office

## Office européen des brevets

(19)

(11) Veröffentlichungsnummer: **0 041 626**
**B1**

(12) **EUROPÄISCHE PATENTSCHRIFT**

(45) Veröffentlichungstag der Patentschrift:
14.11.84

(51) Int. Cl.³: **B 01 D 19/04** // C01B25/02

(21) Anmeldenummer: **81103642.5**

(22) Anmeldetag: **12.05.81**

(54) **Entschaümermischung aus Alkalisalzen von Sulfobernsteinsäuredialkylestern und höheren aliphatischen Alkoholen und Verwendung dieser Mischungen zum Entschäumen von mineralsauren Aufschlussmassen.**

(30) Priorität: **16.05.80 DE 3018758**

(43) Veröffentlichungstag der Anmeldung:
**16.12.81 Patentblatt 81/50**

(45) Bekanntmachung des Hinweises auf die Patenterteilung:
**14.11.84 Patentblatt 84/46**

(84) Benannte Vertragsstaaten:
**FR GB IT NL SE**

(56) Entgegenhaltungen:
**DE - A - 1 917 388**
**US - A - 2 328 551**
**US - A - 2 544 564**
**US - A - 3 004 923**
**US - A - 4 024 072**
**US - A - 4 065 404**

**Römpps Chemie Lexikon 1975, Seite 3398**
**Kinnacker-Küchler, Chemische Technologie, Bd. 4, 1972, Seite 471**

(73) Patentinhaber: **Chemische Fabrik Stockhausen GmbH, Bäkerpfad 25, D-4150 Krefeld (DE)**

(72) Erfinder: **Peppmöller, Reinmar, Dr., Kemmerhofstrasse 189, D-4150 Krefeld (DE)**

(74) Vertreter: **Klöpsch, Gerald, Dr.-Ing., An Gross St. Martin 6, D-5000 Köln 1 (DE)**

## Beschreibung

Die Erfindung betrifft Entschäumermischungen aus Alkalisalzen von Sulfobernsteinsäuredialkylestern und höheren aliphatischen Alkoholen und deren Verwendung als Entschäumer für mineralsaure Aufschlussmassen, insbesondere Phosphataufschlussmassen.

Entschäumer für nicht aggressive, insbesondere wässrige Medien stehen seit längerer Zeit zur Verfügung. So nennt etwa US-A-2 328 551 als Entschäumer für Boilerwasser oberflächenaktive, hauptsächlich hydrophobe organische Substanzen, die unsubstituierte Kohlenwasserstoffketten mit wenigstens 12 C-Atomen, gebunden an nahe benachbarte hydrophile Gruppen des gleichen Moleküls enthalten. Ein Entschäumer, der zum Einsatz in wässrigen Lösungen von Ethanolamin geeignet ist, die zum Auswaschen saurer Komponenten aus Gasmischungen verwendet werden, wird in US-A-2 544 564 angegeben. Dieser Entschäumer besteht aus einer Lösung von Stearylalkohol in Isopropylalkohol.

Das Entschäumen stark saurer, also chemisch sehr aggressiver Medien wirft jedoch besondere Probleme auf, die mit konventionellen Entschäumern – unter anderem bedingt durch ihre chemische Unbeständigkeit unter diesen Einsatzbedingungen – nicht oder nur unzureichend gelöst werden können. Die Verminderung unerwünschter Schaumbildung ist aber gerade bei solchen Prozessen, in denen stark saure Reaktionslösungen zum Einsatz kommen, von erheblicher technischer Bedeutung.

Das unkontrollierte Schäumen stark saurer Medien bei technischen Verarbeitungsprozessen bedingt erhebliche Nachteile. Es erfordert eine entsprechende Berücksichtigung bei der apparativen Auslegung der Produktionsanlagen und mindert den Durchsatz in erwünschtem Masse. Auch ist die Gefahr einer unkontrollierten Schaumvermehrung und damit das Risiko des Überschäumens mit allen Folgeproblemen, wie Metallkorrosion und Hautverätzungen gegeben.

Es war daher immer eine zwingende Notwendigkeit durch Verwendung von Entschäumern, die mit Säure verlaufenden, schäumenden Arbeitsprozesse zu erleichtern und kontrollierbar zu machen. Hierzu fanden fast alle verfügbaren organischen, hydrophoben Flüssigkeiten, oftmals sogar ohne weitere Zusatzmittel Verwendung. Insbesondere sind zu nennen: Tallöl, Tallölfettsäure, Ölsäure, sulfatierte Tallölfettsäuren, sulfatierte Ölsäuren und Silikone.

Zur Schaumkontrolle in stark sauren Medien sind etwa gemäss US-A-4 064 404 Zusammensetzungen verwendbar, die hauptsächlich aus sulfoniertem Tallöl bestehen und zusätzlich einen langkettigen Alkohol mit 4 bis 20 C-Atomen und ein nichtionisches Additiv enthalten.

Weitere bekannte Schauminhibitoren beruhen auf der Basis von Fettsäure- und Fettalkoholalkoxilaten. So nennt etwa die DE-A-1 917 388 als Entschäumer zum Einsatz bei der Herstellung von Phosphorsäure nach dem Nassverfahren 2-Komponentengemische aus gradkettigen, primären C-16 bis C-30 Alkoholen und Etheralkoholen. Diese Entschäumergemische liegen als Feststoffe vor, die zum Einsatz als Entschäumerflüssigkeit bei niederen Temperaturen durch Anwendung eines geeigneten Lösungsmittels oder durch chemische Modifikation solubilisiert werden müssen.

Die Erfahrung zeigt, dass die Wirkung eines Entschäumers stark von der Zusammensetzung des Substrats beeinflusst wird. Daneben spielten Temperatur, Luftzugangsstelle oder Art und Menge eines gegebenenfalls in der Reaktionsmasse entstehenden Gases eine entscheidende Rolle. Meist gelang die Entschäumung nur für eine kurze Zeit, so dass – wie zum Beispiel in DE-A-1 917 338 und US-A-4 024 072 angegeben – öfters hintereinander oder an mehreren empirisch festzulegenden Stellen dosiert werden musste. Dabei blieb es fraglich, ob man den optimalen Verteilungsgrad des Zusatzmittels erreichte.

Es wurde auch festgestellt, dass bei höherer Dosierung des Entschäumers das Behältermaterial und/oder die Abdichtungen deutlich stärker angegriffen wurden. Letzteres galt besonders für Gummiabdichtungen bei Kontakt mit fettsäurehaltigen Medien. Da Mineralsäuren aus Fettsäureestern innerhalb kürzester Zeit Fettsäuren freisetzen, war Entsprechendes auch für fetthaltige Entschäumer zu bemerken. Vielfach wirkten die zur Schaumdämpfung benutzten Produkte im neutralen oder schwach alkalischen Medium besser und länger als im sauren. Speziell für die Phosphorsäureherstellung nach dem Nassverfahren wird ein Fettsäurereaktionsprodukt mit 0,25 bis 1 Mol Hydroxylamin beschrieben (US-A-3 437 437). Dieses Produkt besteht aus Amiden, Amidestern und nicht umgesetzter Fettsäure. Wünschenswert ist jedoch ein Produkt ohne Fettsäure und Fettsäurederivate.

Aufgabe der Erfindung ist daher die Schaffung eines an Fettsäure bzw. Fettsäurederivaten freien Entschäumers für stark mineralsaure Systeme, welcher bei unterschiedlichen Betriebsbedingungen und Zusammensetzungen des schäumenden Systems ein möglichst gleichförmiges, günstiges Schaumverhalten zeigt.

Der erfolgreichen Lösung dieser technischen Aufgabe stand die Erkenntnis entgegen, dass Substanzen, wie sie zur Beeinflussung der Oberflächenspannung unter chemisch nicht aggressiven Bedingungen verwendet werden, unter sauren Bedingungen als nicht hinreichend chemisch resistent bekannt sind. So sind etwa Sulfobernsteinsäuredialkylester mit Alkoholen mittlerer Kettenlänge nach Römpps Chemielexikon, 1975 S. 3398 gute Netz-, Emulgier- und Dispergiermittel, zeigen jedoch, wie in Winnacker-Küchler Chemische Technologie, Band 4, 1972, S. 471 ausgeführt, nur begrenzte Säure- und Alkalibeständigkeit.

Überraschenderweise wurde gefunden, dass die Aufgabe einen an Fettsäure bzw. Fettsäurederivaten freien Entschäumer für stark mineralsaure Systeme bereitzustellen, gemäss der Erfindung durch ein Gemisch aus Alkalisalzen von Sulfobernsteinsäuredialkylestern und höheren aliphatischen Alkoholen gelöst wird.

Gegenstand der Erfindung ist daher eine Entschäumermischung, dadurch gekennzeichnet, dass sie aus

a) wenigstens einem Alkalisalz wenigstens eines Sulfobernsteinsäuredialkylesters, dessen Esteralkylreste gleich oder verschieden, linear oder verzweigt sein können und mindestens 7 und höchstens 22 C-Atome aufweisen,

b) wenigstens einem aliphatischen Alkohol, der linear oder verzweigt sein kann und mindestens 6 und höchstens 20, bevorzugt 7 bis 13 C-Atome aufweist, wobei das Gewichtsverhältnis von Komponente a) zu b) 1:4 bis 40:1, vorzugsweise 1:3 bis 30:1, beträgt und

c) gegebenenfalls wenigstens einem einwertigen Alkohol mit 1 bis 5 C-Atomen, einem mehrwertigen Alkohol mit 2 bis 6 C-Atomen, einem Etheralkohol und/oder einem entweder wasserlöslichen Polyalkylenglykol, gegebenenfalls mit Wasser, oder einem öllöslichen Polyalkylenglykol, Polyalkylenglykolether und/oder Dialkylether, gegebenenfalls mit aliphatischen, alicyclischen und/oder aromatischen Kohlenwasserstoffen, in Mengen bis zu 60 Gew.-%, bezogen auf die Gesamtmischung aus den Komponenten a), b) und c) besteht.

Die gute Entschäumungswirkung muss insofern überraschen, als die Komponenten a) und b) der Mischung alleine unter den Betriebsbedingungen nur einen äusserst geringen Effekt zeigen.

Besonders geeignet sind Entschäumungsmischungen, in denen das Gewichtsverhältnis von Komponente a) zu b) 1:4 bis 4:1, vorzugsweise 1:3 bis 3:1 ist. Das Gewichtsverhältnis der beiden Komponenten a) und b) ist für die Entschäumungswirkung kritisch. Ausserhalb der angegebenen Mischungsverhältnisse fällt die Entschäumungswirkung deutlich ab, während sie innerhalb der angegebenen Verhältnisse einen deutlichen synergistischen Effekt zeigt, das heisst deutlich über der Entschäumungswirkung der Einzelkomponenten liegt.

Die Alkylreste der Komponente a) können gleich oder verschieden, linear und/oder verzweigt sein und weisen mindestens 7, höchstens 22 C-Atome auf. Die Komponente a) kann auch aus 2 oder mehreren verschiedenen Sulfobernsteinsäuredialkylestern bestehen, wobei es auch möglich ist, eine Mischung verschiedener Alkalisalze zu verwenden. Als Alkalisalze sind die Natriumsalze besonders bevorzugt. Es können jedoch auch die Kalium- und Ammoniumsalze verwendet werden.

Beispiele für geeignete Dialkylester der Sulfobernsteinsäure sind: Heptylester, Octylester, Nonylester, Decylester, Undecylester, Dodecylester, Tridecylester, Myristylester, Pentadecylester, Cetylester, Stearylester, Heptadecylester, Oleylester, Nonadecylester, Arachylester, Heneicosylester und Behenylester mit linearer oder verzweigter C-Kette.

Die Mischungskomponente b), d.h. der aliphatische Alkohol, kann linear oder verzweigt sein und weist mindestens 6 und höchstens 20 C-Atome, bevorzugt 7 bis 13 C-Atome auf. Es hat sich gezeigt, dass lineare Alkohole eine etwas bessere Entschäumerwirkung als verzweigte Alkohole gleicher Kohlenstoffzahl haben. Die Mischungskomponente b) kann auch aus mehreren verschiedenen Alkoholen bestehen.

Beispiele für diese Alkohole sind Hexanol, Heptanol, Octanol, Nonanol, Decanol, Undecanol, Dodecanol, Tridecanol, Myristinalkohol, Pentadecanol, Cetylalkohol, Heptadecanol, Stearylalkohol, Oleylalkohol, Nonadecanol und Arachylalkohol mit linearer oder verzweigter C-Kette.

Die Mischungen stellen im allgemeinen niedrig- bis mittelviskose Flüssigkeiten dar, die sich bei Wasserzugabe unter intermediärer Ausbildung eines hochviskosen Gels lösen bzw. emulgieren lassen.

Um die Handhabung, insbesondere das Löse- und Emulgierverhalten der Mischung aus den Komponenten a) und b) im Hinblick auf ihre Verwendung als Entschäumer zu verbessern, ist es zweckmässig, der Mischung aus den Komponenten a) und b) als weitere Zusätze einwertige Alkohole mit 1 bis 5 C-Atomen und/oder mehrwertige Alkohole mit maximal 6 C-Atomen, Etheralkohole und/oder wasserlösliche Polyalkylenglykole zuzusetzen. Diese Zusätze können entweder herstellungsbedingt bereits wasserhaltig sein oder zusammen mit Wasser zugegeben werden. Anstelle von wasserlöslichen Polyalkylenglykolen können auch öllösliche Polyalkylenglykole, Polyalkylenglykolether und/oder Dialkylether, ggf. zusammen mit aliphatischen, alicyclischen und/oder aromatischen Kohlenwasserstoffen, wie z.B. Mineralölen, zugegeben werden.

Beispiele für geeignete Alkohole, Etheralkohole sowie wasserlösliche Polyalkylenglykole sind Methanol, Ethanol, Propanol, Butanol, Isobutanol, Pentanol, Isopentanol, Isopropanol, Ethylenglykol, Diethylenglykol, Triethylenglykol, Propylenglykol, Polypropylenglykol (MG <800), Polyethylenglykol (MG 200–2000), 3-Methoxybutanol, Methylglykol, Ethylglykol, Propylglykol, Methyldiglykol, Ethyldiglykol, Butyldiglykol, Glycerin.

Für öllösliche Etheralkohole, Polyglykole und Dialkylether werden als Beispiele genannt:

Butylglykol, Butyldiglykol, Polypropylenglykol (MG 800–2000), Diheptylether, Dioctylether, Dinonylether, Didecylether, Diundecylether.

Die Menge dieser zusätzlichen Komponente c) beträgt bis zu 60 Gew.%, vorzugsweise 5 bis 30 Gew.%, bezogen auf die Gesamtmischung aus a), b) und c).

Der Zusatz der Komponente c) bewirkt, dass die Mischung, ohne dass sich zunächst ein Gel ausbildet, mit Wasser zu einer homogenen Flüssigkeit bzw. Emulsion mischen lässt.

Die zur Herstellung des Entschäumers notwendigen Sulfobernsteinsäureester können nach bekannten Verfahren aus Maleinsäurediester durch Sulfitierung mit z.B. Natriumhydrogensulfit hergestellt werden [FR-A-1 089 797 und Caryl, Ind. Engng. Chem. 33 (6) (1941)].

Die linearen und/oder verzweigten Alkohole mit 6–20 C-Atomen werden nach gängigen grosstechnischen Verfahren aus nativen Fettsäuren durch katalytische Hydrierung, aus Ethylen nach dem Ziegler-Verfahren oder auch höheren Olefinen durch die Oxo-Synthese erhalten. Die Alkohole können in reiner Form, aber auch in technischer Qualität eingesetzt werden, solange die alkoholischen Komponenten charakterbestimmend sind.

Die erfindungsgemässen Mischungen finden dort Verwendung, wo im mineralsauren Milieu Schaum auftritt und bekämpft werden muss. Dies ist insbesondere bei nassen Aufschlussverfahren der Fall wie zum Beispiel der Phosphorsäureherstellung durch Reaktion von Phosphatgestein mit Schwefelsäure. Bei der Gewinnung von Phosphorsäure nach dem «Nassverfahren» lässt man Phosphatgestein (beispielsweise Apatit) mit Schwefelsäure genau bestimmter Konzentration bei erhöhter Temperatur reagieren. Meist geschieht dies in einem Mischer und mehreren hintereinandergeschalteten Aufschlussbehältern.

Das Phosphorsäure-Nassverfahren verläuft bei den meisten der gebräuchlichen, calcinierten und uncalcinierten Phosphatmineralien mit übermässiger Schaumbildung, die im Misch- und ersten Aufschlussbehälter besonders stark ist, doch kann diese auch in den nachfolgenden Aufschlussbehältern bzw. im Verdampfer erheblich stören.

Eine weitere Anwendung der erfindungsgemässen Entschäumer betrifft die NPK-Produktion, bei der Phosphatgestein mit Salpetersäure bestimmter Konzentration zur Reaktion gebracht und so in ein Düngemittel überführt wird. Auch hier kommt es während der Aufschlussphase zu erheblicher Schaumbildung, die den Einsatz eines Entschäumers erforderlich macht.

Die Anwendungskonzentration der erfindungsgemässen Entschäumer richtet sich nach der Qualität der verwendeten Phosphatgesteine. Da das Schaumverhalten je nach Ursprungsland verschieden ist, wird die anzuwendende Menge des Entschäumers durch einen Vorversuch im Labor bestimmt. Zur Schaumdämpfung genügen im allgemeinen Mengen zwischen 45 und 600 g/t $P_2O_5$, doch auch darüber hinausgehende Konzentrationen sind ohne Bedenken möglich.

Die Erfindung wird durch die nachfolgenden Beispiele erläutert:

Beispiele

Es wurden aus den Gruppen Sulfobernsteinsäureester, C6–C20-Alkohole und Glykole typische Vertreter ausgewählt und 10× so miteinander vermischt, dass das Gewichtsverhältnis des Esters zum C6–C20-Alkohol zwischen 1:4 und 40:1, vorzugsweise zwischen 1:3 und 30:1 lag. Es resultierten 10 Entschäumer (I bis X), deren Zusammensetzung nachfolgender Tabelle entnommen werden kann.

Tabelle 1

| | I | II | III | IV | V | VI | VII | VIII | IX | X | XI | XII |
|---|---|---|---|---|---|---|---|---|---|---|---|---|
| Sulfobernsteinsäure-di-2-ethylhexyl-ester, Na-Salz | 65% | 65% | | | | 30% | | 30% | | | | 85% |
| Sulfobernsteinsäure-di-isononylester, Na-Salz | | | 50% | | | | 40% | 30% | | | | |
| Sulfobernsteinsäure-di-isododecyl-ester, Na-Salz | | | | 30% | | | | | | | | |
| Sulfobernsteinsäure-di-n-octylester, Na-Salz | | | | | 25% | | | | | | | |
| Sulfobernsteinsäure-di-behenylester, Na-Salz | | | | | | | | | 30% | | | |
| Sulfobernsteinsäure-di-isononylester, Na-Salz | | | | | | | | | | 80% | | |
| n-Octylalkohol | 30% | | | | | | 15% | | | | | |
| n-Nonylalkohol | | | 40% | | | | | | | | 100% | |
| n-Undecylalkohol | | 30% | | | | | 15% | | | | | |
| Alkoholgemisch aus der Oxo-Synthese, OH-Zahl: 225 | | | | 60% | | 60% | | | | 2% | | |
| Alkoholgemisch aus der Oxo-Synthese, OH-Zahl: 140 | | | | | 70% | | 50% | | 70% | | | |

Tabelle 1 (Fortsetzung)

|  | I | II | III | IV | V | VI | VII | VIII | IX | X | XI | XII |
|---|---|---|---|---|---|---|---|---|---|---|---|---|
| Ethylenglykol | 5% | 5% | | | | 10% | | 10% | | | | |
| 1,2-Propandiol | | | 10% | | | | 10% | | | | | 15% |
| Diethylenglykol | | | | | | | | | | | | |
| monobutylether | | | | 10% | 5% | | | | | | 18% | |

Entschäumer Nr. XI stellt n-Nonylalkohol allein und Entschäumer Nr. XII eine Mischung aus Sulfobernsteinsäurediester und Propandiol dar.

Die Herstellung der erfindungsgemässen Mischung ist nicht kritisch und kann nach bekannten Verfahren erfolgen. Für die Anwendung als Entschäumer ist es nicht wesentlich, ob die Mischung aus den Komponenten a), b) und ggfs. c) als solche dem zu entschäumenden Substrat zugesetzt oder ob die einzelnen Mischungskomponenten einzeln zudosiert werden.

Zur Bestimmung der Schaumintensität von Phosphatgestein beim Aufschluss mit Schwefelsäure wurden jeweils 100 g Khourigba-Phosphat (Korngrösse <0,5 mm) in 142 g Schwefelsäure (65%ig) eingestreut und mit einem Blattrührer (70 min⁻¹) verrührt. Als Aufschlussbehälter diente eine 1 l-Polyethylenflasche mit einem Durchmesser von 90 mm, deren oberer Teil abgeschnitten worden war. Die Schaumhöhen wurden über die Zeit gemessen und prozentual mit den Werten ohne Entschäumer verglichen (Tabellen 2, 3 und 4). Die Versuchsdauer betrug 1,5 Stunden. Danach wurde die Aufschlussmasse durch eine Glasfilternutsche (D 1) und das Filtrat nochmals durch einen Glasfiltertiegel (D 4) gegeben. Abschliessend wurde die Jodfarbzahl (JFZ) der resultierenden rohen Phosphorsäure bestimmt (DIN 6162).

Berechnung der prozentualen Restschaumhöhe (R) gegenüber dem Blindwert:

$$R = \frac{S_{n_i}}{S_{o_i}} \times 100$$

$S_{n_i}$ = Schaumhöhe zum Zeitpunkt i,

$S_{o_i}$ = Schaumhöhe der Masse ohne Entschäumer zum Zeitpunkt i.

Tabelle 2

Blindversuch:
Entschäumerkonzentration: 0 g/t Rohphosphat

| Zeit (min) | 0 | 15 | 30 | 60 | 90 |
|---|---|---|---|---|---|
| Schaumhöhe (mm) | 47 | 24 | 17 | 14 | 9 |

Tabelle 3
Entschäumerkonzentration:
150 g/t Rohphosphat

| Zeit (min) Entschäumer | | 0 | 15 | 30 | 60 | 90 |
|---|---|---|---|---|---|---|
| I | % | 21,3 | 20,8 | 17,6 | 14,3 | ‹14 |
| II | % | 20,2 | 18,8 | 14,7 | ‹14,3 | ‹14 |
| III | % | 22,4 | 20,8 | 17,6 | 14,3 | ‹14 |
| IV | % | 22,4 | 20,8 | 17,6 | 14,3 | ‹14 |
| V | % | 23,4 | 22,9 | 17,6 | 14,3 | ‹14 |
| VI | % | 21,3 | 20,8 | 17,6 | 14,3 | ‹14 |
| VII | % | 21,3 | 20,8 | 17,6 | 14,3 | ‹14 |
| VIII | % | 22,4 | 20,8 | 17,6 | 14,3 | ‹14 |
| IX | % | 24,5 | 23,3 | 18,2 | 15,0 | 14,3 |
| X | % | 38,4 | 25,0 | 21,2 | 16,4 | 14,5 |
| XI | % | 42,5 | 27,1 | 23,5 | 17,8 | 15,0 |
| XII | % | 44,7 | 29,2 | 23,5 | 14,3 | ‹14 |

Tabelle 4
Entschäumerkonzentration:
300 g/t Rohphosphat

| Zeit (min) Entschäumer | | 0 | 15 | 30 | 60 | 90 | JFZ |
|---|---|---|---|---|---|---|---|
| I | % | 20,2 | 18,8 | 17,6 | 14,3 | ‹14 | ‹10 |
| II | % | 20,2 | 18,8 | 17,6 | 14,3 | ‹14 | ‹10 |
| III | % | 22,4 | 20,8 | 17,6 | 14,3 | ‹14 | ‹10 |
| IV | % | 21,3 | 20,8 | 17,6 | 14,3 | ‹14 | ‹10 |
| V | % | 21,3 | 20,8 | 17,6 | 14,3 | ‹14 | ‹10 |
| VI | % | 22,4 | 20,8 | 17,6 | 14,3 | ‹14 | ‹10 |
| VII | % | 20,2 | 18,8 | 17,6 | 14,3 | ‹14 | ‹10 |
| VIII | % | 21,3 | 20,8 | 17,6 | 14,3 | 14 | 10 |
| IX | % | 23,4 | 22,4 | 17,6 | 14,3 | ‹14 | |
| X | % | 37,3 | 24,2 | 20,6 | 14,3 | ‹14 | |
| XI | % | 41,5 | 25,0 | 20,6 | 14,3 | ‹14 | ‹10 |
| XII | % | 42,5 | 27,1 | 23,5 | 14,3 | ‹14 | ‹10 |

Zur Durchführung von Entschäumungsversuchen gemäss der NPK-Produktion wurden jeweils 100 g Salpetersäure (57%ig) in eine 1 l-Polyethylenflasche (abgeschnitten, ⌀ 90 mm) eingewogen und 50 g Rohphosphat (Korngrösse <0,5 mm) bei 20 bis 25°C innerhalb 10 Minuten eingestreut. Gerührt wurde mit einem Blattrührer b. 70 min⁻¹, wobei die Versuchsdauer 1,5 Stunden betrug. Die Einsatzmengen an Entschäumer betrugen 300 g bzw. 600 g/t Rohphosphat, entsprechend 95 bzw. 190 g/t $P_2O_5$. In bestimmten Zeitabständen wurden die Schaumhöhen gemessen und prozentual mit dem Blindwert verglichen (Tabellen 5, 6 und 7). Als Kriterium für die entschäumende Wirkung eines Produktes wurde die niedrigste prozentuale Restschaumhöhe während der ersten 15 Minuten des Aufschlusses herangezogen. Die grösste Schaumhöhe wurde im allgemeinen direkt zu Versuchsbeginn erreicht. Die Wirkungen der geprüften Produkte ergeben sich aus der nachfolgenden tabellarischen Übersicht.

## Tabelle 5

Blindversuch:
Entschäumerkonzentration: 0 g/t Rohphosphat

| Zeit (min) Entschäumer | 0 | 15 | 30 | 60 | 90 |
|---|---|---|---|---|---|
| Schaumhöhe (mm) | | 83 | 54 | 44 | 29 | 20 |

## Tabelle 6

Entschäumerkonzentration:
300 g/t Rohphosphat

| Zeit (min) Entschäumer | | 0 | 15 | 30 | 60 | 90 |
|---|---|---|---|---|---|---|
| I | % | 32,5 | 30,5 | 26,1 | 22,4 | 15,0 |
| II | % | 31,3 | 28,6 | 24,9 | 17,2 | ‹15 |
| III | % | 30,1 | 27,8 | 22,7 | 17,2 | ‹15 |
| IV | % | 33,8 | 29,6 | 25,0 | 20,7 | ‹15 |
| V | % | 34,9 | 31,5 | 22,7 | 15,0 | ‹15 |
| VI | % | 33,8 | 30,5 | 25,0 | 20,7 | 15,0 |
| VII | % | 32,5 | 28,6 | 22,7 | 17,2 | ‹15 |
| VIII | % | 32,5 | 28,6 | 22,7 | 17,2 | ‹15 |
| IX | % | 41,5 | 40,7 | 39,8 | 38,0 | 37,5 |
| X | % | 47,0 | 46,2 | 43,2 | 41,4 | 40,0 |
| XI | % | 72,3 | 53,7 | 43,2 | 41,4 | 35,0 |
| XII | % | 49,4 | 53,7 | 50,0 | 48,3 | 40,0 |

## Tabelle 7

Entschäumerkonzentration:
600 g/t Rohposphat

| Zeit (min) Entschäumer | | 0 | 15 | 30 | 60 | 90 |
|---|---|---|---|---|---|---|
| I | % | 28,9 | 29,6 | 25,0 | 17,2 | ‹15 |
| II | % | 28,3 | 26,9 | 20,5 | 15,5 | ‹15 |
| III | % | 27,7 | 24,1 | 15,9 | 15 | ‹15 |
| IV | % | 30,1 | 28,7 | 19,3 | 15,5 | ‹15 |
| V | % | 28,3 | 26,0 | 15,9 | 15 | ‹15 |
| VI | % | 30,1 | 29,6 | 19,3 | 17,2 | ‹15 |
| VII | % | 28,3 | 26,9 | 18,2 | 15,5 | ‹15 |
| VIII | % | 28,3 | 26,9 | 18,2 | 15,5 | ‹15 |
| IX | % | 38,5 | 38,9 | 34,1 | 29,3 | 20,0 |
| X | % | 37,4 | 40,7 | 36,4 | 32,8 | 25,0 |
| XI | % | 63,9 | 44,4 | 34,1 | 31,0 | 25,0 |
| XII | % | 39,8 | 46,3 | 40,9 | 34,5 | 25,0 |

## Patentansprüche

1. Entschäumermischung, dadurch gekennzeichnet, dass sie besteht aus

a) wenigstens einem Alkalisalz wenigstens eines Sulfobernsteinsäuredialkylesters, dessen Esteralkylreste gleich oder verschieden, linear oder verzweigt sein können und mindestens 7 und höchstens 22 C-Atome aufweisen,

b) wenigstens einem aliphatischen Alkohol, der linear oder verzweigt sein kann und mindestens 6 und höchstens 20, bevorzugt 7 bis 13 C-Atome aufweist, wobei das Gewichtsverhältnis von Komponente a) zu b) 1:4 bis 40:1, vorzugsweise 1:3 bis 30:1, beträgt und

c) gegebenenfalls wenigstens einem einwertigen Alkohol mit 1 bis 5 C-Atomen, einem mehrwertigen Alkohol mit 2 bis 6 C-Atomen, einem Etheralkohol und/oder einem entweder wasserlöslichen Polyalkylenglykol, gegebenenfalls mit Wasser, oder einem öllöslichen Polyalkylenglykol, Polyalkylenglykolether und/oder Dialkylether, gegebenenfalls mit aliphatischen, alicyclischen und/oder aromatischen Kohlenwasserstoffen, in Mengen bis 60 Gew.-%, bezogen auf die Gesamtmischung aus den Komponenten a), b) und c).

2. Entschäumermischung nach Anspruch 1, dadurch gekennzeichnet, dass das Gewichtsverhältnis von Komponente a) zu Komponente b) 1:4 bis 4:1, vorzugsweise 1:3 bis 3:1 beträgt.

3. Entschäumermischung nach Anspruch 1 bis 2, dadurch gekennzeichnet, dass sie wenigstens 2 verschiedene Sulfobernsteinsäuredialkylester a) enthält.

4. Entschäumermischung nach einem der Ansprüche 1 bis 3, dadurch gekennzeichnet, dass sie wenigstens 2 verschiedene Alkohole b) enthält.

5. Entschäumermischung nach einem der Ansprüche 1 bis 4, gekennzeichnet durch einen Gehalt an Komponente c) von 5 bis 30 Gew.%.

6. Entschäumermischung nach einem der Ansprüche 1 bis 5, gekennzeichnet durch einen Gehalt an nach der Oxosynthese hergestellten Alkoholen b).

7. Verwendungen der Entschäumermischung nach einem der Ansprüche 1 bis 6 als Entschäumer für mineralsaure Aufschlussmassen, insbesondere Phosphataufschlüsse.

8. Verwendung nach Anspruch 7, in Mengen von 45 bis 600 g/t P$_2$O$_5$.

## Revendications

1. Mélange antimousse, caractérisé en ce qu'il se compose

a) d'au moins un sel alcalin d'au moins un ester dialkylique de l'acide sulfosuccinique, dont les radicaux alkyle de l'ester peuvent être identiques ou différents, linéaires ou ramifiés et présentent au moins 7 et au plus 22 atomes de carbone,

b) d'au moins un alcool aliphatique qui peut être linéaire ou ramifié et présente au moins 6 et au plus 20, de préférence 7 à 13 atomes de carbone, le rapport pondéral du constituant a) au constituant b) étant de 1:4 à 40:1, de préférence de 1:3 à 30:1, et

c) le cas échéant d'au moins un monoalcool en

$C_1$ à $C_5$, d'un polyalcool en $C_2$ à $C_6$, d'un éther-alcool et/ou soit d'un polyalkylèneglycol soluble dans l'eau, le cas échéant avec de l'eau, soit d'un polyalkylèneglycol, d'un éther de polyéthylène-glycol et/ou d'un éther dialkylique solubles dans l'huile, le cas échéant avec des hydrocarbures aliphatiques, alicycliques et/ou aromatiques, dans des quantités jusqu'à 60% en poids, par rapport au mélange total des constituants a), b) et c).

2. Mélange antimousse selon la revendication 1, caractérisé en ce que le rapport pondéral du constituant a) au constituant b) est de 1:4 à 4:1, de préférence de 1:3 à 3:1.

3. Mélange antimousse suivant les revendications 1 ou 2, caractérisé en ce qu'il contient au moins 2 esters dialkyliques de l'acide sulfosuccinique a) différents.

4. Mélange antimousse suivant l'une des revendications 1 à 3, caractérisé en ce qu'il contient au moins 2 alcools b) différents.

5. Mélange antimousse suivant l'une des revendications 1 à 4, caractérisé par une teneur en constituant c) de 5 à 30% en poids.

6. Mélange antimousse suivant l'une des revendications 1 à 5, caractérisé par une teneur en alcools b) préparés par la synthèse oxo.

7. Utilisation du mélange antimousse selon l'une des revendications 1 à 6 comme antimousse pour des masses de désagrégation contenant des acides minéraux, en particulier des désagrégations de phosphates.

8. Utilisation selon la revendication 7, dans des quantités de 45 à 600 g/t de $P_2O_5$.

**Claims**

1. Defoamer mixture, characterised in that it comprises

a) at least one alkali metal salt of at least one sulphosuccinic acid dialkyl ester, the ester alkyl radicals of which can be the same or different, linear or branched, and have at least 7 and at most 22 carbon atoms,

b) at least one aliphatic alcohol which can be linear or branched and has at least 6 and at most 20, preferably from 7 to 13, carbon atoms, the ratio by weight of component a) to b) being from 1:4 to 40:1, preferably from 1:3 to 30:1, and

c) optionally at least one mono-hydric alcohol having from 1 to 5 carbon atoms, a poly-hydric alcohol having from 2 to 6 carbon atoms, an ether alcohol and/or either a water-soluble polyalkylene glycol, optionally with water, or an oil-soluble polyalkylene glycol, polyalkylene glycol ether and/or dialkyl ether, optionally with aliphatic, alicyclic and/or aromatic hydrocarbons, in amounts of up to 60% by weight, based on the total mixture of the components a), b) and c).

2. Defoamer mixture according to claim 1, characterised in that the ratio by weight of component a) to component b) is from 1:4 to 4:1, preferably from 1:3 to 3:1.

3. Defoamer mixture according to claims 1 and 2, characterised in that it contains at least 2 different sulphosuccinic acid dialkyl esters a).

4. Defoamer mixture according to one of claims 1 to 3, characterised in that it contains at least 2 different alcohols b).

5. Defoamer mixture according to one of claims 1 to 4, characterised by a content of component c) of from to 30% by weight.

6. Defoamer mixture according to one of claims 1 to 5, characterised by a content of alcohols b) manufactured according to the oxo synthesis.

7. Use of a defoamer mixture according to one of claims 1 to 6 as defoaming agent for mineral acid digestion masses, especially phosphate digestions.

8. Use according to claim 7 in amounts of from 45 to 600 g/t $P_2O_5$.